# EUROPEAN PATENT APPLICATION

(11) **EP 0 706 164 A1**
(43) Date of publication of application: **10.04.1996**
(21) Application number: 95306958.0
(22) Date of filing: 02.10.1995
(51) Int. Cl.: G09G 3/22, G06F 1/32

(54) **Power management for display devices**

(30) Priority: 03.10.1994 US 317147
(71) Applicant: TEXAS INSTRUMENTS INCORPORATED, Dallas, Texas 75243 (US)
(72) Inventor: Hodson, Lester L., McKinney, Texas 75069 (US); Primm, Charles E., Plano, Texas 75075 (US)
(74) Representative: Holt, Michael

(57) **Abstract**

A field emission color display electronics system includes a power reduction apparatus 40. The display system includes a matrix-addressable emitter plate 14 and a voltage-switched trichromatic anode plate 10. In a reduced power consumption mode, the display is switched from a color mode to a monochrome mode, and power reduction apparatus 40 causes the green luminance information (carrying the monochrome video information) to bypass frame memory 80 and to be coupled directly from multiplexers 82 to multiplexers 84 via tri-state buffers 86. Buffers 86 provide isolation of the bypassing lines during color operation of the display. Since the present invention permits frame memory 80 to be bypassed during monochrome operation, frame memory 80 can be placed in standby mode, thereby saving approximately one watt of power. Three alternative schemata for controlling entry into the reduced power consumption mode are disclosed.

## Description

### Technical Field of the Invention

The present invention relates generally to field emission flat panel display devices and, more particularly, to a field emission flat panel color display device having a power reduction apparatus which changes the display from color to monochrome, reduces clock rates, eliminates anode switching and places the frame memory in standby or power off mode.

### Background of the Invention

For more than half a century, the cathode ray tube (CRT) has been the principal electronic device for displaying visual information. The widespread usage of the CRT may be ascribed to the remarkable quality of its display characteristics in the realms of color, brightness, contrast and resolution. One major feature of the CRT permitting these qualities to be realized is the use of a luminescent phosphor coating on a transparent faceplate.

Conventional CRT's, however, have the disadvantage that they require significant physical depth, i.e., space behind the actual display surface, making them bulky and cumbersome. They are fragile and, due in part to their large vacuum volume, can be dangerous if broken. Furthermore, these devices consume significant amounts of power.

The advent of portable computers has created intense demand for displays which are lightweight, compact and power efficient. Since the space and weight limitations on the display function of these devices preclude the use ofa conventional CRT, there has been significant interest in efforts to provide satisfactory flat panel displays having comparable or even superior display characteristics, e.g., brightness, resolution, versatility in display, power consumption, etc. These efforts, while producing flat panel displays that are useful for some applications, have not produced a display that can compare to a conventional CRT.

Currently, liquid crystal displays (LCD's) are used almost universally for laptop and notebook computers. In comparison to a CRT, these displays provide poor contrast, only a limited range of viewing angles is possible, and, in color versions, they consume power at rates which are incompatible with extended battery operation. In addition, color screens tend to be far more costly than CRT's of equal screen size.

As a result of the drawbacks of liquid crystal display technology, thin film field emission display technology has been receiving increasing attention by industry. Flat panel displays utilizing such technology employ a matrix-addressable array of pointed, thin-film, cold field emission cathodes in combination with an anode comprising a phosphor-luminescent screen.

The phenomenon of field emission was discovered in the 1950's, and extensive research by many individuals, such as Charles A. Spindt of SRI International, has improved the technology to the extent that its prospects for use in the manufacture of inexpensive, low-power, high-resolution, high-contrast, full-color flat displays appear to be promising.

Advances in field emission display technology are disclosed in U.S. Patent No. 3,755,704, "Field Emission Cathode Structures and Devices Utilizing Such Structures," issued 28 August 1973, to C.A. Spindt et al.; U.S. Patent No. 4,857,161, "Process for the Production of a Display Means by Cathodoluminescence Excited by Field Emission," issued 15 August 1989, to Michel Borel et al.; U.S. Patent No. 4,940,916, "Electron Source with Micropoint Emissive Cathodes and Display Means by Cathodoluminescence Excited by Field Emission Using Said Source," issued 10 July 1990 to Michel Borel et al.; U.S. Patent No. 5,194,780, "Electron Source with Microtip Emissive Cathodes," issued 16 March 1993 to Robert Meyer; and U.S. Patent No. 5,225,820, "Microtip Trichromatic Fluorescent Screen," issued 6 July 1993, to Jean-Frédéric Clerc. These patents are incorporated by reference into the present application.

The Borel et al. ('161) patent discloses a field emission flat panel display having a glass substrate on which are arranged a matrix of conductors. In one direction of the matrix, conductive columns comprising the cathode electrode support the microtips. In the other direction, above the column conductors, are perforated conductive rows comprising the gate electrode. The row and column conductors are separated by an insulating layer having holes permitting the passage of the microtips, each intersection of a row and column corresponding to a pixel.

The Clerc ('820) patent discloses a trichromatic field emission flat panel display having a first substrate comprising the cathode and gate electrodes, and having a second substrate facing the first, including regularly spaced, parallel conductive stripes comprising the anode electrode. These stripes are alternately covered by a first material luminescing in the red, a second material luminescing in the green, and a third material luminescing in the blue, the conductive stripes covered by the same luminescent material being electrically interconnected.

A process for addressing a trichromatic field emission flat panel display in accordance with the Clerc patent consists of successively raising each set of interconnected anode stripes periodically to a potential which is sufficient to attract the electrons emitted by the microtips of the cathode conductors corresponding to the pixels which are to be illuminated or "switched on" in the color of the selected anode stripes. Those anode stripes which are not being selected are held at a lower potential such that the electrons emitted by the microtips are repelled or have an energy level below the threshold cathodoluminescence energy level of the luminescent materials covering those unselected anodes.

The field emission flat panel color display of the type described above consumes significantly less energy than a comparable color liquid crystal display device. As an example, it is expected that power usage by a 10" diagonal VGA field emission display is on the order of two watts, while an equivalent color liquid crystal display is projected to use about six watts. Since the display screen tends to be the dominant energy consumer within a portable computer system, the use of a field emission device as the display allows extended battery operation life over a liquid crystal device. Alternatively, the use of a field emission device as the display permits the use of a smaller, lighter weight battery than is required by a liquid crystal display device for the same operating life. Even so, it is not seen where the present technology will provide the capability of operating a color notebook computer from a single battery pack for the duration of a transcontinental or intercontinental flight, often used as the standard of quality for such a system. Therefore, it is deemed desirable to be able to further reduce the power consumed by a field emission device display in order to extend the time which the portable computer may operate on battery power and/or to reduce the size requirements for the battery.

### Summary of the Invention

In accordance with the principles of the present invention, there is disclosed herein a field emission color display apparatus, the apparatus including frame memory for storing video data formatted for a frame sequential display. The apparatus comprises means for switching the apparatus between a normal power consumption mode and a reduced power consumption mode, and means for providing a monochrome display when the apparatus is in the reduced power consumption mode. The apparatus additionally comprises means for bypassing the frame memory when the monochrome display is provided.

Further in accordance with the principles of the present invention, there is disclosed herein a field emission color display apparatus. The apparatus comprises an emitter plate comprising a plurality of column conductors intersecting a plurality of row conductors, and electron emitters at the intersection of each of the row and column conductors. The apparatus also comprises an anode plate adjacent the emitter plate, the anode plate comprising conductive stripes which are alternately covered by materials of color luminescence, the conductive stripes covered by the same luminescent material being electrically interconnected to form comb-like structures corresponding to each color. The apparatus additionally comprises a data formatter and timing controller responsive to a mixed video input signal for coupling frame sequential video information signals to the column conductors, the data formatter and timing controller including a frame memory for storing video data formatted for a frame sequential display. The apparatus further comprises means for switching the apparatus between a normal power consumption mode and a reduced power consumption mode, and means for providing a monochrome display when the apparatus is in the reduced power consumption mode. Finally, the apparatus comprises means for bypassing the frame memory when the monochrome display is provided.

Still further in accordance with the present invention, there is disclosed herein a field emission color display apparatus, the apparatus including frame memory for storing video data formatted for a frame sequential display. The apparatus comprises means for coupling the apparatus to a first power source, the apparatus being capable of operation from the first power source for a limited time. The apparatus further includes means for switching the apparatus between a normal power consumption mode and a reduced power consumption mode, and means for providing a monochrome display when the apparatus is in the reduced power consumption mode. Finally, the apparatus includes means for bypassing the frame memory when the monochrome display is provided.

### Brief Description of the Drawing

The features of the present invention may be more fully understood from the following detailed description, read in conjunction with the accompanying drawings, wherein:
FIG. 1 is a block diagram of a field emission display electronics system in accordance with the present invention;
FIG. 2 is a block diagram detailing data formatter and timing controller frame memory bypass circuitry of the system of FIG. 1; and
FIGS. 3A, 3B and 3C are block diagram illustrations of three alternative schemata for controlling the power reduction apparatus of the system of FIG. 1.

### Description of the Preferred Embodiment

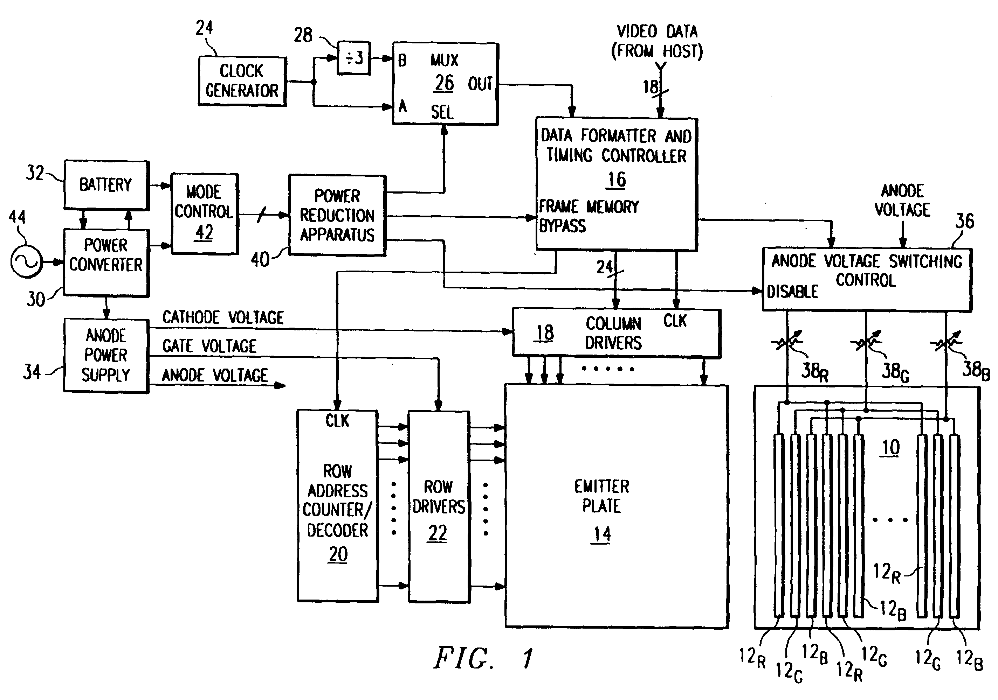

Referring initially to FIG. 1, there is shown a block diagram of a field emission display electronics system which includes a power reduction apparatus in accordance with the present invention. The system includes a matrix-addressable emitter plate 14, which may be of the type described in the Borel et al. ('161) patent, and a trichromatic anode plate 10, which may be of the type described in the Clerc ('820) patent. Anode plate 10 includes a multiplicity of regularly spaced, parallel conductive stripes 12_{R}, 12_{G} and 12_{B}, referred to collectively as stripes 12, comprising the anode electrode. These stripes 12 are alternately covered by a first material luminescing in the red, a second material luminescing in the green, and a third material luminescing in the blue, the conductive stripes covered by the same luminescent material being electrically interconnected so as to form a comb-like structure. As described earlier, plates 10 and 14 are positioned in facing relationship such that the electrons emitted from emitter plate 14 are drawn toward the high potential anode stripes 12_{R}, 12_{G} and 12_{B} of anode plate 10.

Anode power supply 34 is responsive to power converter 30 for providing a high voltage to anode voltage switching control 36, typically on the order of 300 to 800 volts. Anode voltage switching control 36, responsive to commands issued from data formatting and timing controller 16, provides voltages simultaneously (if the image is in monochrome) or sequentially (if the image is in color) to the three combs of anode stripes 12_{R}, 12_{G} and 12_{B}, each of these voltages being set to a level in accordance with the brightness characteristics of the corresponding luminescent material.

The column lines (cathode electrodes) (not shown) of matrix-addressable emitter plate 14 are individually coupled to column drivers 18. Drivers 18 receive video data from the host device, which has been formatted by data formatter and timing controller 16 into separate red, green and blue display frames from an original mixed signal. In this example, data formatter and timing controller 16 may process the video data according to the VGA standard, and may typically output 640 parallel lines of data to 640 column drivers 18, to thereby provide one color component of a single row of the display. The data from the data formatter and timing controller 16 are latched into column drivers 18 upon each occurrence of a clock signal received at the CLK input terminal.

The row lines (gate electrodes) (not shown) of matrix-addressable emitter plate 14 are individually coupled to row drivers 22. Drivers 22 receive enable signals from the row address counter/decoder 20. Device 20 includes a counter which is responsive to each occurrence of a clock signal received at the CLK input terminal, and a decoder which applies an enabling signal sequentially to each of the row drivers 22. In this example, the counter of device 20 may count to 480, the decoder portion of device 20 applying enabling signals sequentially to each of 480 row drivers 22.

Clock generator 24 provides the clock input signals to column drivers 18 and row address counter/decoder 20 via its A input terminal through multiplexer 26 during color operation of the display device of the present invention. Each occurrence of the clock signal latches a row of video data signals into column drivers 18 and enables a single one of row drivers 22. Each display frame requires that each one of row drivers 22 be enabled for each of the three colors. Thus it is seen that, in the present example, 480 x 3 = 1,440 clock pulses are required for a complete three-color display frame.

The power system of the display device of the present invention includes a power converter 30 which is responsive either to a source of ac power 44 or to a battery 32 for providing the system power requirements, including the anode voltage coupled to anode voltage switching control 36, the gate voltage coupled to the row drivers 22, the cathode voltage coupled to the column drivers 18, as well as other voltages (not shown) required by other circuits within the display device. In a preferred arrangement, power converter provides charging current to battery 32 when power converter is coupled to ac source 44. When power converter 30 is uncoupled from source 44, i.e., when the display device is being used as a portable device, battery 32 is required to provide all system power requirements.

Power reduction apparatus 40 is included within the above-described display device, such apparatus 40 enabling reduction of the power consumption of the display device, thereby extending the operating life of the device while it is drawing power from battery 32 or reducing the size and weight of battery 32 for a predetermined operating life. In a reduced power consumption mode, power reduction apparatus 40 switches the display from a color mode to a monochrome mode, and power reduction apparatus 40 performs various functions, each of which contributes to power reduction of the display device. A first function, described in the related application, provides the effect of disabling the switched application of high voltage sequentially to the three combs of anode stripes 12_{R}, 12_{G} and 12_{B} of anode plate 10. A second function, also described in the related application, reduces the frequency of the clock signal applied to the row address counter/decoder 20 and the column driver circuits 18.

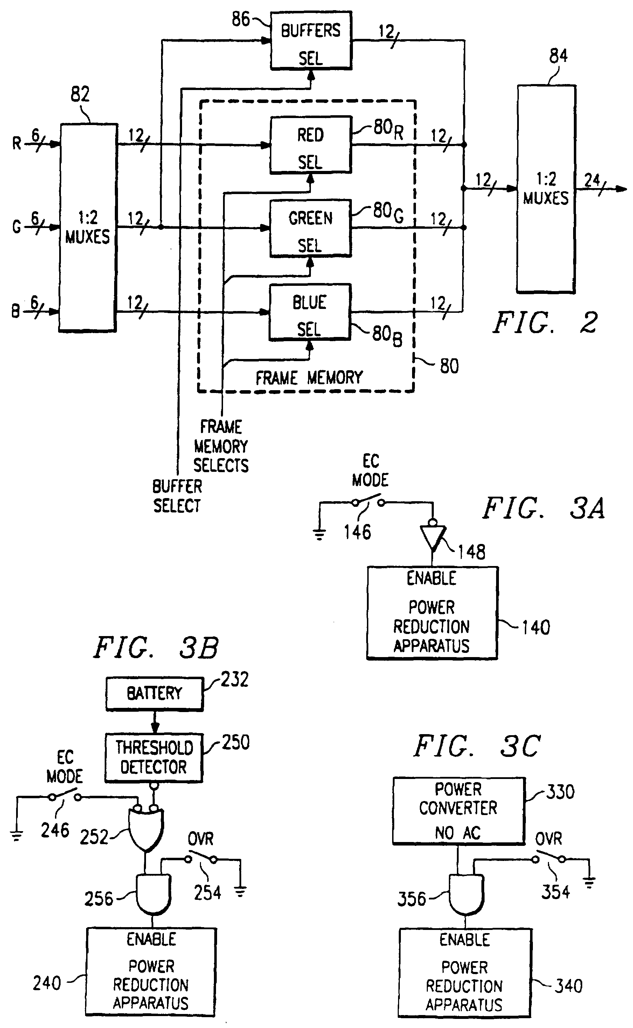

In accordance with the present invention, power reduction apparatus provides a third function whereby the power expended within data formatter and timing controller 16 is reduced when the display system is switched from a color mode to a monochrome mode. This function is described in relation to FIG. 2, in which there is shown through the use of a detailed block diagram the salient elements of data formatter and timing controller 16.

Referring to FIG. 2, a mixed video signal comprising three sets of color luminance signals are applied as the inputs to 1:2 multiplexers 82. Input R comprises, in the present example, six signal lines carrying six bits of red color luminance information, corresponding to the red hue brightness of a single pixel of the display. Similarly, input G comprises six signal lines carrying six bits of green color luminance information, and input B comprises six signal lines carrying six bits of blue color luminance information. Multiplexers 82 arrange each set of color data into 12-bit words, each word comprising the color luminance information for two pixels, for the convenience of storage in frame memory 80. For simplification of the illustration, the clocking functions within the elements of FIG. 2 are not shown, as it is clear that one skilled in the art would be easily able to provide these functions.

Multiplexers 82 provide 36 output signals: twelve signals corresponding to the luminance information corresponding to two red pixels, twelve signals corresponding to the luminance information corresponding to two green pixels, and twelve signals corresponding to the luminance information corresponding to two blue pixels. These 36 signals are applied to frame memory 80 which, in this example, comprises three video memories 80_{R}, 80_{G} and 80_{B}. Further by way of illustration, each video memory 80_{R}, 80_{G} and 80_{B} comprises 307,200 words of 12-bit length, which is the capacity necessary to store two full frames of six bits of luminance information for each pixel of a 640-column by 480-row display system.

In accordance with a field sequential mode of operation, an entire frame of red luminance information is clocked out of red video memory 80_{R} through 1:2 multiplexers 84 into column drivers 18 (of FIG. 1). Multiplexers 84 convert the 12-bit words from video memory 80_{R} into the 24-bit words which, according to the present example, are required by column drivers 18. After an entire frame of red luminance information has been transferred from red video memory 80_{R} through multiplexers 84 to column drivers 18, a similar process is repeated for an entire frame of green luminance information from green video memory 80_{G}, followed by an entire frame of blue luminance information from blue video memory 80_{B}, the entire process being repeated continuously.

Each video memory 80_{R}, 80_{G} and 80_{B} has tri-state outputs, i.e., when the memory's select (SEL) line is true, its outputs are 1's or 0's, but when it is unselected, its outputs are open circuited (have a high impedance). Thus the twelve output lines from the three video memories 80_{R}, 80_{G} and 80_{B} can be joined at the inputs to multiplexers 84 without interfering with one another, so long as only one video memory 80_{R}, 80_{G} and 80_{B} is selected at any time.

In accordance with the present invention, the input terminals of buffers 86 are coupled to the twelve signals output from the multiplexers 82 corresponding to the green luminance information. The output terminals of buffers 86 are coupled, with the three sets of twelve output lines from video memories 80_{R}, 80_{G} and 80_{B} to the inputs of multiplexers 84. Buffers 86 are tri-state devices, and therefore, when unselected, their output lines do not interfere with the outputs from video memories 80_{R}, 80_{G} and 80_{B}.

According to monochrome video display practice, monochrome video information is carried on the green signal lines. Thus, the structure shown in FIG. 2 permits the monochrome video information to bypass frame memory 80 and pass from multiplexers 82 to multiplexers 84 via buffers 86. Buffers 86 provide isolation of the bypassing lines during color operation of the display. Since the present invention permits frame memory 80 to be bypassed during monochrome operation, frame memory 80 can be placed in standby mode, thereby saving approximately one watt of power, according to current estimates.

FIGS. 3A, 3B and 3C are block diagram illustrations of three alternative schemata for controlling the power reduction apparatus 40 of the system of FIG. 1. These schemata are intended to provide mere functional depictions of structure for switching operation of the display system between the normal mode and an energy conservation (or reduced power consumption) mode. FIGS. 3A through 3C illustrate three embodiments of the elements of the mode control circuitry 42 coupled to power reduction apparatus 40 of FIG. 1. It will be noted that where the reference numerals of two or more of the circuit elements of FIGS. 1 and 3A through 3C differ only in the hundreds place, such elements are similar or substantially identical. For example, power reduction apparatus 40 of FIG. 1 is similar to apparatus 140 of FIG. 3B, apparatus 240 of FIG. 3C and apparatus 340 of FIG. 3C.

Referring to FIG. 3A, power reduction apparatus 140 includes an ENABLE input which can be at a logic "1" level or a logic "0" (or reference ground) level. For the purposes of this illustration, apparatus 140 is enabled into the energy conservation (EC) mode in response to a logic "1" level, and into the normal power consumption mode in response to a logic "0" level. EC MODE switch 146, when actuated to its closed position, couples a logic "0" level to the input of logic inverter 148, whose output terminal is coupled to the ENABLE input terminal of power reduction apparatus 140. Thus, in the embodiment shown functionally in FIG. 3A, EC MODE switch 146 provides manual toggle control of the power consumption operating mode of the display system of the present invention.

Referring now to FIG. 3B, power reduction apparatus 240 includes an ENABLE input which, like apparatus 140 of FIG. 3A, enables apparatus 240 into the EC mode in response to a logic "1" level, and into the normal power consumption mode in response to a logic "0" level. This embodiment includes a threshold detector 250 coupled to battery 232 which provides a logic "0" level output signal when the voltage level of battery 232 drops below a predetermined threshold level. This signal is coupled through logic NAND gate 252 and logic AND gate 256 to provide the EC mode enabling signal to power reduction apparatus 240. EC MODE switch 246, when actuated to its closed position, couples a ground level (logic "0") voltage to the second input of NAND gate 252, thereby also providing the ENABLE to apparatus 240. OVR switch 254, when actuated to its closed position, couples a ground level (logic "0") voltage to the second input of AND gate 256, thereby overriding the enabling effect of either threshold detector 250 or EC mode switch 246. Thus, in the embodiment shown functionally in FIG. 3B, threshold detector 250 provides automatic enabling of the EC mode when the display system battery voltage drops below a predetermined level, and EC MODE switch 246 provides manual enabling of the EC mode, while OVR switch 254 is capable of overriding either of the above enabling features, forcing the display system of the present invention into the normal power consumption operating mode.

Referring finally to FIG. 3C, power reduction apparatus 340 includes an ENABLE input which, like apparatus 140 of FIG. 3A, enables apparatus 340 into the EC mode in response to a logic "1" level, and into the normal power consumption mode in response to a logic "0" level. In this embodiment, power converter 330 provides a logic "1" level output signal NO AC to indicate that it is not coupled to a source of ac power. This signal is coupled through logic AND gate 356 to provide the EC mode enabling signal to power reduction apparatus 340. OVR switch 354, when actuated to its closed position, couples a ground level (logic "0") voltage to the second input of AND gate 356, thereby overriding the enabling effect of the NO AC output signal from power converter 330. Thus, in the embodiment shown functionally in FIG. 3C, power converter 330 provides automatic enabling of the EC mode when there is no source of ac power, while OVR switch 354 is capable of overriding this automatic feature, forcing the display system of the present invention into the normal power consumption operating mode.

Whereas conventional symbols for switches and logic elements are depicted in the figures and used in the descriptions of the accompanying text, it will be recognized by those of skill in the art to which it pertains that such representations are merely functional, and that an actual implementation of the apparatus of the present invention would likely include solid state devices in conjunction with computer software illustratively responding to the function keys of a computer keyboard for these purposes.

A field emission flat panel display device, as disclosed herein, including a power reduction apparatus which alters operating features of the display device to thereby reduce the amount of power consumed by the device, provides significant advantages over the display devices of the prior art. First, by operating the system in monochrome, rather than in a color mode, all of the anode stripes are held at a constant potential, and no anode switching takes place. Thus, the anode switching power is reduced to zero.

Second, since the operation in monochrome requires only a single sweep across the emitter plate for each display frame, as contrasted with three sweeps (red, green and blue) for each color display field, the row and column driver circuits and the emitter panel will consume one-third the capacitive power of color display of the type described herein.

In accordance with the present invention, an additional power savings benefit of field emission display operation in the energy conservation mode is realized from the frame memory bypass feature, saving approximately one watt of power dissipation in frame memory 80. The green luminance information, carrying the monochrome signal, is routed through buffer 86, bypassing frame memory 80, and memory 80 can be placed in standby in this operational mode.

There are many advantages provided by the present invention. First, the energy conservation mode extends battery life. Therefore a smaller battery can be incorporated into the display device, making the device more lightweight and easier to carry. The use of smaller battery also reduces the cost of the display device, allowing it to be priced more competitively. Another advantage of the invention is that maximum use of the gray scale is maintained. Since column drivers 18 still provide the same display information in the monochrome mode and in the full color mode, approximately 2⁶ = 64 gray scale levels can be achieved with the invention as compared to the sixteen gray-scale levels typical in today's monochrome systems.

Yet another advantage of the invention is that the change from full color to monochrome display can be performed within one frame since the anode voltage switching control 36 supplies unswitched power to all of the anode stripes 12_{R}, 12_{G} and 12_{B} at the completion of the current frame. The invention as disclosed herein facilitates a display luminance in the monochrome mode which equals or exceeds the luminance in full color mode but at a reduced power level. The display luminance level in the monochrome mode can be maintained at a lower level of power consumption since all of the anode stripes 12_{R}, 12_{G} and 12_{B} are simultaneously illuminated, as contrasted with the sequential process described for the full color mode. Additionally, luminance in a monochrome display is achieved at a lower power level since the electrons emitted by all of the microtips are utilized because all anode stripes 12_{R}, 12_{G} and 12_{B} are energized and thus collect all the emitted electrons. In full color mode only the electrons reaching the energized anode stripes of a single color are utilized for luminance. Furthermore, in monochrome mode the phosphors of all three colors are energized throughout the entire frame instead of during one third of the frame. This increase in energization makes the phosphors more efficient.

It is expected that, as a result of operation of the display system in the energy conservation mode, power consumption of a 10" diagonal VGA field emission display can be reduced from at least two watts in the full color mode to about one-half watt. Since a liquid crystal display device requires a back-lighted screen, there is no power savings benefit from switching from color to monochrome, in such a device. Furthermore, since LCD display devices do not employ frame sequential screen formatting, there can be no power savings benefit derived from bypassing a frame memory in such a device. Finally, it is seen that the voltage level requirement for the red, green and blue anode stripes of the field emission display device is reduced from approximately 700-800 volts in the color mode to approximately 300-500 volts in the monochrome mode.

While the principles of the present invention have been demonstrated with particular regard to the structures and methods disclosed herein, it will be recognized that various departures may be undertaken in the practice of the invention. For example, while the disclosure describes a switched anode structure, it will be recognized that the present invention may be applied equally to a field emission display device using a tetrode arrangement for focusing the emitted electrons to the anode stripe of the desired color. Also, while the disclosure describes frame memory 80 as physically located in the display, as shown in FIG. 2, it could also be located in the host system. Additionally, while the disclosure describes the data formatter and timing controller 16 as processing the video data according to the VGA standard; other video resolutions and array sizes can be accommodated. Furthermore, while the disclosure describes a three-color display device, it is intended to include any color display generation scheme employing field emission. The scope of the invention is not intended to be limited to the particular structures and methods disclosed herein, but should instead be gauged by the breadth of the claims which follow.

## Claims

1. A field emission color display apparatus, said apparatus including frame memory for storing video data formatted for a frame sequential display, said apparatus comprising:
means for switching said apparatus between a normal power consumption mode and a reduced power consumption mode;
means for providing a monochrome display when said apparatus is in said reduced power consumption mode; and
means for bypassing said frame memory when said monochrome display is provided.

2. The apparatus in accordance with Claim 1 wherein said bypassing means includes buffers, the buffers having input terminals coupled to a source of video information, and having output terminals coupled to output terminals of said frame memory.

3. The apparatus in accordance with Claim 2 wherein said buffers and said frame memory are tri-state devices, the output terminals thereof providing digital output signals when a corresponding device is selected, and acting as open circuits when the corresponding device is deselected.

4. The apparatus in accordance with Claims 2 - 3 wherein said frame memory is deselected when said buffers are selected.

5. The apparatus in accordance with Claims 1 - 4, further comprising:
an emitter plate comprising a plurality of column conductors intersecting a plurality of row conductors, and electron emitters at the intersection of each of said row and column conductors;
an anode plate adjacent said emitter plate, said anode plate comprising conductive stripes which are alternately covered by materials of color luminescence, said conductive stripes covered by the same luminescent material being electrically interconnected to form comb-like structures corresponding to each color;
a data formatter and timing controller responsive to a mixed video input signal for coupling frame sequential video information signals to said column conductors, said data formatter and timing controller including a frame memory for storing video data formatted for a frame sequential display.

6. The apparatus in accordance with Claims 1 - 5, further comprising comprising:
means for coupling said apparatus to a first power source, said apparatus being capable of operation from said first power source for a limited time.

7. The apparatus in accordance with Claim 6 further including means for coupling said apparatus to a second power source, said first power source providing power to said apparatus when said apparatus is remote from said second power source.

8. The apparatus in accordance with Claim 7 wherein said switching means comprises means for determining when the voltage level of said first power source has dropped to a predetermined threshold.

9. The apparatus in accordance with Claims 6 - 8 wherein said first power source comprises a battery.

10. The apparatus in accordance with Claims 8 - 9 wherein said switching means comprises means for detecting the absence of potential from said second power source.

11. The apparatus in accordance with Claims 7 - 10 wherein said second power source comprises an ac current source.

12. A system having a field emission color display apparatus in accordance with Claims 1 - 11, comprising:
a system host including a data processor.
